# EUROPEAN PATENT APPLICATION

(11) **EP 2 378 262 A1**
(43) Date of publication of application: **19.10.2011**
(21) Application number: 11075061.9
(22) Date of filing: 07.04.2011
(51) Int. Cl.: G01L 9/00

(54) **Vibrating cylinder transducer with protective coating**

(30) Priority: 14.04.2010 GB 1006223
(71) Applicant: WESTON AEROSPACE LIMITED, Farnborough, Hants GU14 7PW (GB)
(72) Inventor: Hanscombe, Paul, Farnborough Hants GU14 7PW (GB); Rudkin, Mark, Farnborough Hants GU14 7PW (GB)
(74) Representative: Ponder, William Anthony John

(57) **Abstract**

The invention provides a vibrating cylinder transducer for measuring the pressure or density of a fluid medium comprising: a cylindrical vibrator, in use having at least one surface coupled to a fluid medium to be measured; a drive means for vibrating the cylindrical vibrator; a sensor for detecting the resonant frequency of the cylindrical vibrator; and an output coupled to the sensor, the output configured to provide an output signal indicative of the pressure and/or the density of the fluid medium; wherein the surface coupled to the fluid medium is coated in a corrosion resistant polymer layer. Preferably the corrosion resistant polymer layer is formed from parylene.

## Description

### Field of the Invention

The invention relates to vibrating cylinder transducers used for measuring the pressure or density of a fluid.

### Background to the Invention

Vibrating cylinder pressure or density sensors operate by detecting changes in the resonant frequency of a vibrating cylinder that result from changes in applied pressure or density. Typically, a cylinder of ferromagnetic material is driven to vibrate at its resonant frequency using an applied magnetic field.

At least one surface of the cylinder is coupled to a fluid medium which is to be measured. For pressure transducers, a change in pressure changes the stress in the surface of the cylinder, which changes the resonant frequency of the cylinder. For density transducers, a change in the fluid density changes the load on the surface of the cylinder, which alters the resonant frequency of the cylinder. Changes in the resonant frequency of the cylinder can be detected and the pressure or density of the fluid determined.

Vibrating cylinder sensors are high precision sensors and are capable of measuring to a level of parts per million (ppm). They are very stable and so have low annual drift rates.

Examples of vibrating cylinder transducers are described in US 3,863,505, US 3,199,355 and US 7,258,014.

### Summary of the Invention

The invention provides a vibrating cylinder transducer as defined in the independent claims, to which reference should now be made.

The inventors have found that in some environments existing vibrating cylinder transducers are susceptible to corrosion and hence the build up of corrosive deposits. Corrosive deposits add mass to the cylinder and so change the resonant frequency of the cylinder. This leads to erroneous pressure and density measurements. This problem does not appear to have been recognised or addressed in the prior art.

An advantage of preferred embodiments of the invention is that the transducer is resistant to corrosion. It is therefore suitable for extended use in harsh environments.

A further advantage of preferred embodiments of the invention, using parylene as a coating, is that parylene is hydrophobic. The coating therefore repels water (which is necessary for corrosion) and encourages run off and self cleaning.

When seeking to provide a corrosion resistant vibrating cylinder transducer, it is not possible to change the material properties of the cylinder, because these are dictated by the need to use a material with high magnetic permeability (i.e. a magnetic material) and a Young's modulus that has low temperature dependence. Traditional corrosion protection systems such as plating, painting or dip coating are therefore not suitable, as they require a coating of a few tens of microns thick to produce a pin hole free coating. They would add significant mass to the cylinder, with the mass per unit area being comparable to the cylinder, which would significantly affect the sensor performance.

Alternative coating technologies, such as TiN coating or ceramic coating, produce high stress coatings that change the compliance of the cylinder and so are also unsuitable. They would significantly affect the response of the cylinder to changes in pressure and density.

The present invention provides a barrier formed by a thin, low stress, compliant, corrosion resistant coating. The coating is preferably formed from a polymer, such as parylene. Parylene can form pin hole free, low stress coatings of less than 20 µm thickness, i.e. very low mass coatings. Parylene is highly stable and corrosion resistant, and is hydrophobic. Other polymer coatings are also suitable, including the fluoropolymer marketed by 3M as the Novec Electronic coating, polytetrafluoroethylene (PTFE), fluorinated ethylene propylene (FEP), the Dow Corning RTV Elastomeric coatings or solventless heat cure coatings and self-assembled monolayer coatings such as the phophonates marketed for example by Aculon Inc., of 11839 Sorrento Valley Road in San Diego, CA, USA.

### Brief Description of the Drawings

Preferred embodiments of the invention will now be described with reference to the accompanying drawings in which:
Figure 1 is a schematic longitudinal cross-section of a pressure transducer assembly in accordance with the invention;
Figure 2 is a schematic horizontal cross-section of the pressure transducer of Figure 1, and illustrates the control electronics;
Figure 3 is a flow diagram illustrating a method for producing either a pressure or density transducer with a parylene coating in accordance with the present invention;
Figure 4a shows a liquid density transducer for measuring fluid density in accordance with the invention;
Figure 4b is a schematic horizontal cross-section of the density transducer of Figure 4a, and illustrates the position of the drive and pick up coils;
Figure 5a shows a gas density transducer for measuring gas density in accordance with the invention; and
Figure 5b is a schematic horizontal cross-section of the spool body in the density transducer of Figure 5a, and illustrates the arrangement of the drive and pick up coils.

### Detailed Description

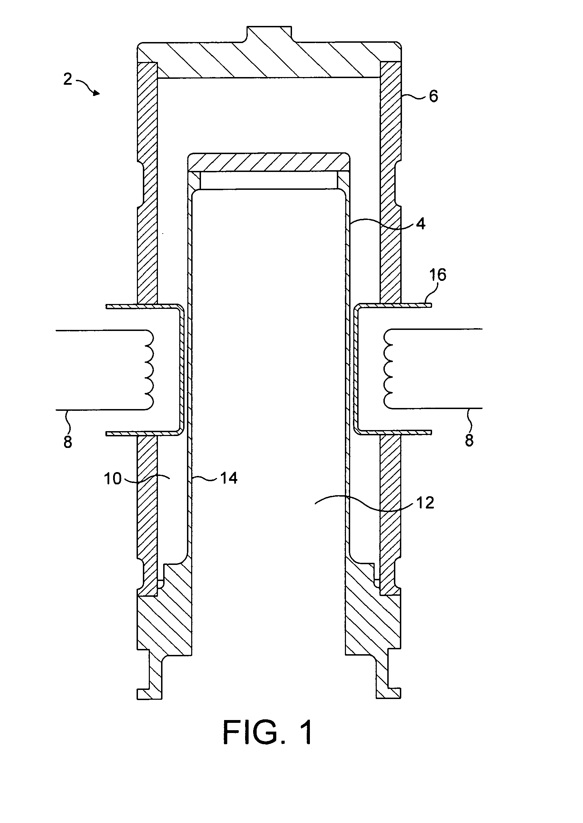

Figure 1 shows a pressure transducer device 2 for measuring fluid pressure in accordance with the invention. A ferromagnetic cylinder 4 is located within a housing 6. The housing 6 and cylinder 4 are open at one end to allow the fluid to be measured into the internal chamber 12 defined by the cylinder 4. The cylinder 4 is thin walled and made of a ferromagnetic material with a low thermo-elastic coefficient, in order to minimise the variation of its resonant frequency with temperature. A suitable material for the cylinder is Ni-Span C 902®, a nickel-iron alloy available from Special Metals Corporation, USA, (www.specialmetals.com). Any other ferromagnetic material whose Young's modulus is resistant to changes of temperature, such as Elinvar™, may be used.

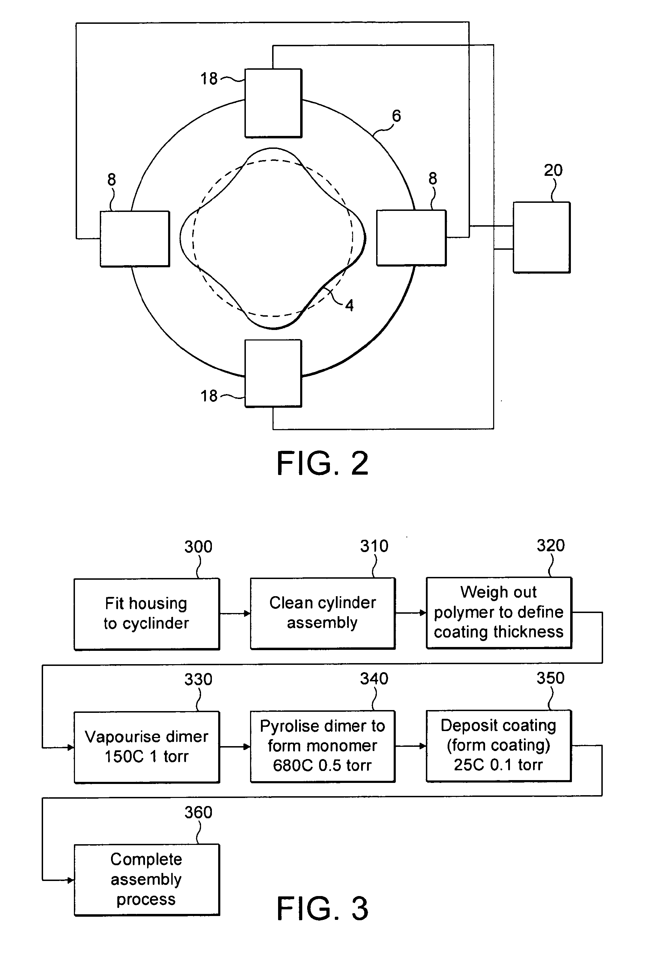

Excitation and measurement of the cylinder may be made with the arrangement shown in Figure 2, although the actual arrangement will be dependent on the designed vibration mode. Electromagnetic coils 8 are positioned around the cylinder 4. Drive coils 8 are used to excite movement of the cylinder, i.e. to set up resonant vibration of the cylinder. Pick up coils 18, as shown in Figure 2 are used to detect the vibration of the cylinder.

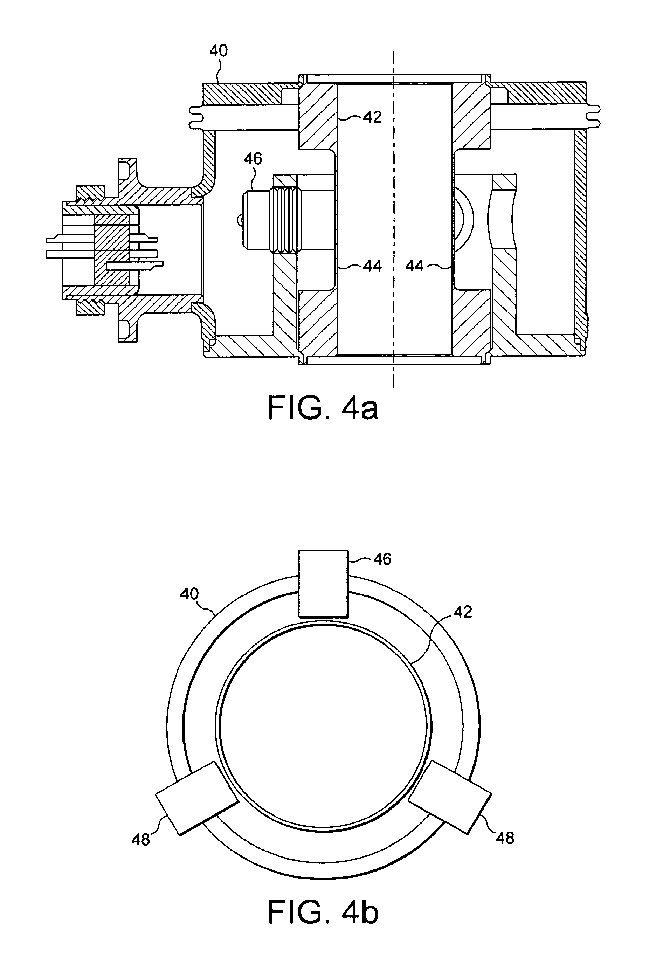

The housing 6 in the pressure transducers may also be formed of Ni-SpanC 902® to minimise the generation of any unwanted stresses in the assembly due to thermal mismatches. However, panels 16 which are cups surrounding the coils 8 and 18, are formed from a non-ferromagnetic material and are brazed into the walls of the housing 6. All of the other joints in the transducer assembly are electron-beam welded. In the pressure transducer in Figure 1 (and in the density transducer described with reference to Figure 4a below), the space 10, formed between the cylinder 4 and the housing 6 is evacuated i.e. is close to a vacuum.

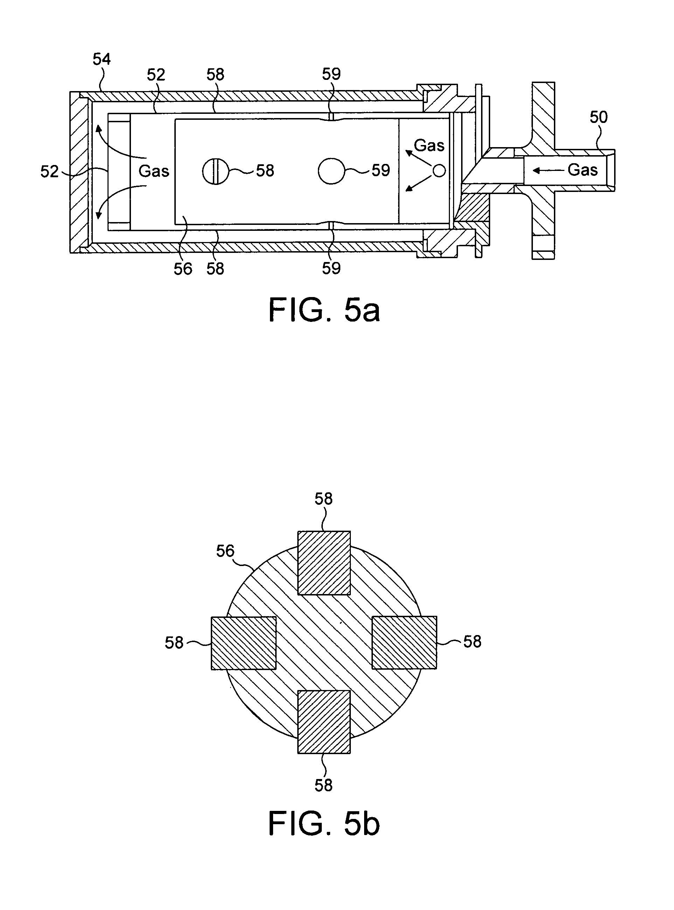

Other known elements in vibrating cylinder transducers of this type may be included in the assembly, which are not shown in Figure 1 (or in Figures 4a, 4b, 5a and 5b). For example, a filter plate may be provided across the end of the cylinder to prevent the ingress of particulates into the interior chamber 12, and a temperature sensing sensor may be used to provide temperature measurement that can be used by the control electronics to provide a temperature compensated output.

Referring to Figure 1, the internal surface 14 of the cylinder 4 is provided with a thin compliant polymer coating that is corrosion resistant and so protects the ferromagnetic cylinder from corrosion. The coating is preferably a polymer coating, such as parylene, a fluoropolymer such as marketed by 3M under the Novec Electronic coatings, polytetrafluoroethylene, fluorinated ethylene propylene (FEP), a silicone coating such as marketed by Humiseal or Dow Corning under the RTV Elastomeric coatings or solventless heat cure coatings, or a self-assembled monolayer phosphonate coating, such as those marketed by Aculon Inc., referenced above. In this example, the thin coating is formed of parylene. Parylene is the generic name for a variety of poly (p-xylylene) polymers, and the preferred variant for this invention is parylene D. Parylene can form a thin, stress free barrier that is extremely stable. It is therefore effective in preventing corrosion of the ferromagnetic cylinder. It has the added benefit of being a hydrophobic material and therefore repels the moisture which is necessary for corrosion.

In the example shown in Figure 2, the cylinder 4 is excited into resonant vibration by the drive coils 8. The cylinder vibrates in a hoop shape, as shown in Figure 2, although other modes shapes are possible. The symmetry of the hoop mode shape makes the sensor stable and accurate even when there is significant external vibration. The pick up coils 18 are used to monitor the frequency of vibration as well as the amplitude of vibration so that it can provide feedback to the drive system 20 and the cylinder can be maintained in resonance. The drive system typically comprises control electronics which are implemented in hardware. However, the control electronics may be implemented in a mixture of hardware and software. The sensor coils 18 are positioned relative to the drive coils 8, so that the sensor coils are at points of maximum cylinder displacement. The control electronics are operative to control the drive coils 8 as well as calculate and provide an output indicative of pressure or density.

When pressure is applied to the inside of a cylinder 4 by the fluid medium, tensile stresses are generated in the cylinder wall. These stresses cause the resonant frequency of the cylinder to increase due to increased stiffness. This is the same mechanism that causes the resonant frequency of a stretched string to increase with tension. Accordingly, changes in resonant frequency can be used to determine changes in pressure.

In order that the protective coating on the internal wall of the cylinder 4 does not affect the sensor performance, the coating 14 needs to have significantly lower mass than the ferromagnetic cylinder and needs to be substantially stress free and sufficiently elastic that temperature changes do not significantly change the mechanical properties of the cylinder. The effect of temperature changes can be assessed by measuring the temperature coefficient and thermal hysteresis. Parylene is able to provide such a coating. Parylene coating can be made of a thickness of less than 20 microns.

For vibrating cylinder pressure sensors and gas density sensors, the shape of the internal surface of the cylinder which is to be coated also provides a challenge and limits the number of suitable coating techniques that can be used. The cylinder surface is a blind bore with a depth much greater than its diameter. The coating needs to be pinhole free, of uniform thickness and typically of a thickness less than or equal to 20 microns.

One suitable coating technique is vacuum deposition. Figure 3 is a flow diagram illustrating the basic steps taken in the manufacture of a parylene coated, vibrating cylinder transducer. In step 300 the cylinder 4 is first welded to the housing 6. The cylinder assembly is then cleaned in step 310 so that the surface to be coated is free of grease, oils and particulates. The outer surface of the housing may be masked to aid subsequent assembly processes. The area of the surface to be coated is known and so in step 320 the required amount of polymer to define a desired coating thickness is measured out. The parylene is at this stage in the form of a dimer. The dimer is sublimed at 150°C at a pressure of 1 Torr in step 330 and is then pulled into a pyrolisation chamber at approximately 690°C and 0.5 Torr pressure in step 340. In the pyrolisation chamber the dimer splits into two divalent radical monomers. The monomers are then pulled into an ambient temperature deposition chamber in step 350, where the pressure is approximately 0.1 Torr. Under these conditions the monomers reform into long chain polymers on all of the surfaces within the deposition chamber. A cold trap may be provided between the deposition chamber and the vacuum pump to prevent the monomers reaching the pump and oil vapour back streaming into the chamber. Following the deposition of the coating the assembly process can be completed in step 360, with the fixing of the coils 8 and 18 and all the required electronics.

Accordingly, during the process, the parylene polymer goes from the dimer diparaxylene in the vaporisation chamber to the monomer paraxylene in the paralysis chamber and finally to a polymer polyparaxylene on the surface that is coated.

As described above, PTFE or similar polymers such as FEP can also be used to provide the coating layer, as can self assembled monolayer phosphonate coatings.

Fluoropolymer coatings may be applied by dipping or by spraying the parts followed by a heat cure. A similar process may be applicable to the elastomeric coatings although some require moisture to complete the curing process. PTFE coatings may be applied by the application of a primer and a top coat where the top coat is sprayed on. PTFE may also be applied electrostatically. FEP is a similar polymer to PFTE and is one which has good chemical resistance being a fluorinated ethylene propylene copolymer. These polymers may also be applied by degreasing and then blasting the surface, applying the polymer, often with a resin, and then fusing the layer to the surface. Self assembled monolayer coatings, such as the phosphonates marketed for example by Aculon Inc., can be applied in a monolayer thickness, where the phosphonic acid end sticks to the metal and the carbon based tail provides the desired chemical properties, i.e. a hydrophobic corrosion resistant coating. The coating is formed by degreasing the surface, priming the surface and then applying the coating via an aqueous or solvent based carrier or by vacuum deposition.

Another suitable coating technique is plasma polymer coating, which has been shown to provide good anticorrosion properties due to the enhanced adhesion between the polymer and the metal surface.

Figure 4a illustrates a liquid density sensor using a vibrating cylinder. The sensor comprises a housing 40, to which a cylinder 42 is coupled. The cylinder is of the same type as described with reference to Figure 1 and is formed from Ni-SpanC 902®. However, the cylinder in Figure 4 is open at both ends to allow fluid access. The internal surface of the cylinder 44 is coated with parylene D or another suitable thin, stress free polymer layer.

Drive and pick up coils 46, 48 are used in the same manner as described with reference to Figure 2, but in a different configuration. Figure 4b is a schematic horizontal cross-section of the density transducer of Figure 4a, and illustrates the position of the drive and pick up coils. A single drive coil 46 is provided to drive the cylinder in resonance and two pick up coils 48 disposed symmetrically around the outer circumference of the cylinder to detect the frequency and amplitude of vibration. Feedback electronics (not shown) are provided between the pick up coils and the drive coil so that the cylinder can be maintained in resonance. In a density transducer, when the density of the fluid increases the load on the cylinder surface increases and the resonant frequency decreases. Accordingly, liquid density can be calculated from a measure of resonant frequency.

Figure 5a illustrates a gas density sensor using a vibrating cylinder, in accordance with the invention. In the sensor of Figure 5a, the cylinder 52 is held within a housing or liner 54 into which gas is allowed to flow, entering through opening 50. The direction of gas flow is indicated by the arrows in Figure 5a. The cylinder 52 is open at both ends to allow gas to flow over both the internal and external surface of the cylinder. The cylinder is formed from ferromagnetic material, such as Ni-SpanC 902®, as described above. Both the internal and external surfaces of the cylinder 52 are coated with parylene D or another suitable corrosion resistant, low stress material, as described above. The inner surface of the liner may also be coated with a corrosion resistant layer, which may be the same as the coating on the cylinder.

Within the cylinder there is a spool body 56 on which drive and pick up coils are mounted. As shown, the drive coils 58 are located at one end of the cylinder 52 and the pick up coils 59 at another. Figure 5b is a schematic horizontal cross-section of the spool and illustrates the symmetric distribution of the drive coils 58 around the spool body 56. The pick up coils are arranged around the spool body in the same manner. Feedback electronics (not shown) are provided between the pick up coils and the drive coils so that the cylinder can be maintained in resonance. Changes in gas density affect the load on the cylinder and so alter the resonant frequency of the cylinder. Accordingly, gas density can be calculated from a measure of resonant frequency.

The vibrating cylinder transducers described with reference to the drawings each use electromagnetic drive and sensing means. However, it is possible to use other systems. For example, electrostatic and or optical systems can be employed for drive and detection. It is also possible to use other mode shapes and rearrange the coils accordingly.

## Claims

1. A vibrating cylinder transducer for measuring the pressure or density of a fluid medium comprising:
a cylindrical vibrator, in use having at least one surface coupled to a fluid medium to be measured;
a drive means for vibrating the cylindrical vibrator;
a sensor for detecting the resonant frequency of the cylindrical vibrator; and
an output coupled to the sensor, the output configured to provide an output signal indicative of the pressure and/or the density of the fluid medium;
wherein the surface coupled to the fluid medium is coated in a corrosion resistant polymer layer.

2. A vibrating cylinder transducer according to claim 1, wherein the corrosion resistant polymer layer is formed from parylene.

3. A vibrating cylinder transducer according to claim 2, wherein the corrosion resistant polymer layer is formed from parylene D.

4. A vibrating cylinder transducer according to any preceding claim, wherein the corrosion resistant polymer layer is less than or equal to 20 µm thick.

5. A vibrating cylinder transducer according to any one of the preceding claims, wherein the surface coupled to the fluid medium is an internal surface of the cylindrical vibrator.

6. A vibrating cylinder transducer according to any one of the preceding claims, wherein the corrosion resistant polymer layer is formed using a vacuum deposition technique.

7. A vibrating cylinder transducer according to any one of the preceding claims, wherein the sensor is coupled to the drive means and is configured to apply feedback signals to the drive means to maintain the cylindrical vibrator in resonance.

8. A method of producing a vibrating cylinder transducer for measuring the pressure or density of a fluid, the transducer including a cylinder, the cylinder having a least one surface in contact with a fluid to be measured in use, the resonant response of the cylinder providing an indication of the pressure or density of the fluid, the method comprising the step of coating the surface with a corrosion resistant polymer.
